# EUROPÄISCHE PATENTANMELDUNG

(11) **EP 3 037 332 A1**
(43) Veröffentlichungstag der Anmeldung: **29.06.2016**
(21) Anmeldenummer: 15194801.5
(22) Anmeldetag: 16.11.2015
(51) Int. Cl.: B62J 9/00, B60P 7/10

(54) **LASTENTRÄGERSYSTEM**

(30) Priorität: 19.11.2014 DE 202014105567 U
(71) Anmelder: ZEG Zweirad-Einkaufs-Genossenschaft eG, 50739 Köln (DE)
(72) Erfinder: Papenfuss, Andreas, 99423 Weimar (DE); Dautzenberg, Steffen, 99423 Weimar (DE)
(74) Vertreter: Althaus, Arndt

(57) **Zusammenfassung**

Die Erfindung betrifft ein Lastträgersystem (13, 16) für ein Lastentransportfahrzeug, besondere ein Lastenrad (10), mit einem am Fahrzeug fest angeordneten oder anordbaren Lastträger (17) und mindestens einer am Lastträger (17) abnehmbar montierbaren Aufnahmekiste (18). Um die mindestens eine Aufnahmekiste (18) schnell und sicher am Lastträger (17) montieren und von diesem auch wieder abnehmen zu können, und zugleich einen freien Zugang zu der Kiste (18) bzw. dem darin aufgenommenen Inhalt bei sicherer Arretierung während der Fahrt zu ermöglichen, ist erfindungsgemäß vorgesehen, dass die Aufnahmekiste (18) an den Außenseiten (19) von zwei einander gegenüberliegenden Kistenseitenwänden (20) mit je mindestens zwei im wesentlichen vertikalen Riegelstegen (21) versehen ist und dass der Lastträger (17) mindestens zwei in ihrem Abstand an den Abstand der Kistenseitenwände (20) angepasste, aufragende Halteelemente (25) aufweist, die mit im wesentlichen vertikalen Aufnahmeschlitzen (26) versehen sind, in die die Riegelstege (21) im am Lastträger (17) montierten Zustand der Aufnahmekiste (18) formschlüssig einfassen.

## Beschreibung

Die Erfindung betrifft ein Lastträgersystem für ein Lastentransportfahrzeug, besondere ein Lastenrad, mit einem am Fahrzeug fest angeordneten oder anordbaren Lastträger und mindestens einer am Lastträger abnehmbar montierbaren Aufnahmekiste.

Lastenfahr-oder dreiräder werden häufig von Post-und Paketboten für den Transport von Briefen oder Paketen zu den verschiedenen Adressaten eingesetzt. Damit die dabei transportierten Briefe o.dgl. während des Transports sicher aufgenommen sind, andererseits die jeweiligen Sendungen vom das Fahrzeug benutzenden Boten bei Erreichen der Zieladresse ohne aufwändiges Suchen gegriffen und dem Adressaten ausgehändigt werden können, sind sie in Aufnahmekisten in der Reihenfolge der Auslieferung einsortiert, so dass sie in der richtigen Reihenfolge entnommen werden können, ohne hierfür erst lange aus der Vielzahl der Sendungen herausgesucht werden zu müssen.

In der Vergangenheit war die sichere Montage derartiger Aufnahmekisten am Lastträger des Fahrzeugs ein Problem, denn es kommt zum einen darauf an, den Zugang zu der Kiste von oben nicht durch Befestigungsmittel wie Gurte, Federklappen oder dergleichen zu behindern, andererseits jedoch muss sichergestellt werden, dass die Kiste während der Fahrt auch bei höherer Geschwindigkeit und unebener Fahrbahn nicht vom Lastträger abfallen kann. Schließlich ist häufig auch noch eine Forderung, die Kiste bei Bedarf ohne großen Aufwand und schnell vom Lastträger entfernen zu können, um eine andere Kiste an selbige Stelle zu montieren. Schließlich müssen Briefzusteller während der täglich gefahrenen Runde nicht nur immer eine Handvoll Briefe austragen, die in eine einzige Kiste passen würden, sondern es sind viele Sendungen zuzustellen, deren Gesamtheit nur in mehrere Aufnahmekisten passt.

Aufgabe der Erfindung ist es, ein Lastträgersystem für ein Lastentransportfahrzeug, beispielsweise ein Lastenrad zu schaffen, bei dem die mindestens eine Aufnahmekiste schnell und sicher am Lastträger montiert und von diesem auch wieder abgenommen werden kann, wobei aber der freie Zugang zu der Kiste bzw. dem darin aufgenommenen Inhalt nicht behindert ist und keine Gefahr besteht, dass die Aufnahmekiste während der Fahrt vom Lastträger abfällt.

Diese Aufgabe wird mit der Erfindung dadurch gelöst, dass die Aufnahmekiste an den Außenseiten von zwei einander gegenüberliegenden Kistenseitenwänden mit je mindestens zwei im wesentlichen vertikalen Riegelstegen versehen ist und dass der Lastträger mindestens zwei in ihrem Abstand an den Abstand der Kistenseitenwände angepasste, aufragende Halteelemente aufweist, die mit im wesentlichen vertikalen Aufnahmeschlitzen für das formschlüssige Einfassen der Riegelstege versehen sind; im Montagezustand der Aufnahmekiste am Lastenträger fassen die Regelstege in die Aufnahmeschlitze formschlüssig ein.

Durch die erfindungsgemäße Konstruktion kann die Aufnahmekiste in besonders einfacher und schneller Weise von oben auf den Lastträger aufgesetzt werden, wobei die mindestens je zwei vertikalen Riegelstege an den Außenseiten der einander gegenüberliegenden Kistenseitenwänden in die vertikalen Aufnahmeschlitze der Halteelemente am Lastträger hineingleiten. Die Kiste ist also mit mehreren vertikal verlaufenden Führungen formschlüssig quer zu deren Längsrichtung verriegelt und kann somit seitlich vom Lastträger nicht herunterfallen. Es besteht tatsächlich auch keine Gefahr, dass beispielsweise bei Durchfahren eines tiefen Schlagloches die Kiste von selbst infolge der dann auftretenden stoßartigen Belastung nach oben aus den Aufnahmeschlitzen herausspringt, denn hierzu müsste sie genau in Längsrichtung der Aufnahmeschlitze bewegt werden, was in der Praxis aber tatsächlich nur durch ein aktives Herausziehen mit beiden Händen erfolgen kann. Andernfalls bekommt es dazu, dass sich die Führungsstege in den Aufnahmeschlitzen verklemmen, so dass die Kiste bei allen während einer Fahrt auftretenden Belastungen sicher aufgenommen ist. Mit der erfindungsgemäßen Ausgestaltung kann auf zusätzliche Sicherungsmittel wie Spannriemen o.dgl. verzichtet werden, so dass der freie Zugang zur Öffnung der Kiste von oben unbehindert bleibt.

In vorteilhafter Ausgestaltung der Erfindung sind die Halteelemente in Form von sich vorzugsweise zumindest an einem Teilbereich der Außenseiten der Kistenseitenwände anlegenden Begrenzungswände ausgebildet, in denen je mindestens zwei Aufnahmeschlitze im Abstand der Riegelstege ausgebildet sind.

Besonders vorteilhaft ist es weiter, wenn die Riegelstege an ihren oberen Enden von Anschlagflächen begrenzt sind. Diese Anschlagflächen können sich dann an den oberen Enden der Halteelemente anlegen und die Aufnahmeschlitze bei Bedarf oben abdecken.

Die Riegelstege können im montierten Zustand außen aus den Aufnahmeschlitzen ein Stück weit herausragen, womit man nicht nur einen einfache und zuverlässige Sichtkontrolle über die korrekte Montage der Kiste hat, sondern wodurch auch dann eine sichere Aufnahme gewährleistet ist, wenn - beispielsweise aufgrund von Fertigungstoleranzen - der Abstand der Kistenseitenwände voneinander kleiner als sonst üblich ist und die Kiste somit mit einem gewissen Spiel zwischen den einander gegenüberliegenden Halteelementen an den beiden Seiten des Lastträgers eingesetzt ist. Dieses Spiel kann dann durch die außen aus den Aufnahmeschlitzen herausragenden Riegelstege ausgeglichen werden.

Die Begrenzungswände sind bevorzugt an einem unteren Tragboden des Lastträgers an zwei von dessen Seitenrändern aufragend angeordnet sind. Der Lastträger kann bei dieser Ausführungsform also in besonders einfacher, ästhetisch gleichwohl ausgesprochen ansprechender Weise beispielsweise als einfaches Blechformteil wie eine U-förmige Aufnahmewanne gestaltet sein, mit dem unteren, im wesentlichen horizontalen Tragboden, der an zwei gegenüberliegenden Seitenrändern nach oben umgebogen ist, um die seitlichen Begrenzungswände auszuformen, in denen dann die Aufnahmeschlitze vorgesehen sind.

Um eine seitliche Bewegung der Kiste im im Lastträger aufgenommenen Zustand im Wesentlichen vollständig zu unterbinden und auch die Geräuschentwicklung zu verringern, wenn das Fahrzeug über unebene Wege bewegt wird, beispielsweise über Wegstrecken mit Kopfsteinpflaster, ist es vorteilhaft, wenn die Außenseiten der Kistenseitenwände und/oder die der Aufnahmekiste zugewandten Innenseiten der Halteelemente mit gummielastischen Pufferelementen versehen sind.

Es ist auch möglich, die Riegelstege oder die diese aufnehmenden Aufnahmeschlitze mit vorzugsweise elastischen Gleitführungen zu versehen, die zum einen das Aufsetzen der Kiste auf den Lastträger und das hierzu erforderliche Einführen der Riegelstege in die Aufnahmeschlitze erleichtern, andererseits dafür sorgen können, dass zwischen Riegelstegen und Aufnahmeschlitzen praktisch kein seitliches Spiel bleibt und die Kiste bei der Fahrt somit nicht klappern kann.

Um den besonderen Anforderungen insbesondere im Briefzustelldienst Rechnung zu tragen, bei dem es regelmäßig darauf ankommt, eine große Anzahl von Sendungen transportieren zu können, kann der Lastträger zur Aufnahme mehrerer nebeneinander angeordneter Aufnahmekisten ausgebildet sein.

Weitere Merkmale und Vorteile der Erfindung ergeben sich aus der nachfolgenden Beschreibung und der Zeichnung, worin eine bevorzugte Ausführungsform der Erfindung anhand eines Beispiels dargestellt und näher beschrieben ist. Es zeigt:
- **Fig.1**: ein Dreirad-Fahrzeug mit zwei Lastträgersystemen nach der Erfindung in perspektivischer Darstellung;
- **Fig.2**: das hinter dem Sattel des Fahrzeugs nach Fig.1 angeordnete Lastträgersystem in vergrößerter, perspektivischer Darstellung;
- **Fig.3**: das vor dem Lenker des Fahrzeugs nach Fig.1 angeordnete Lastträgersystem in vergrößerter, perspektivischer Darstellung; und

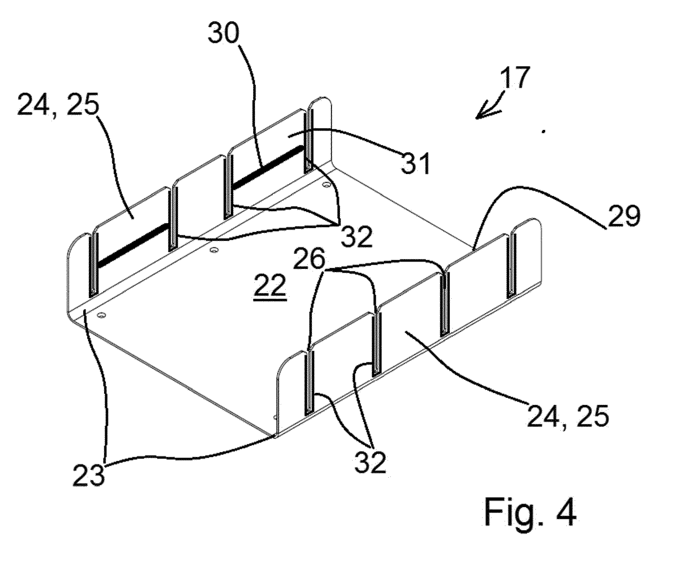

- **Fig.4**: den Lastträger des Lastträgersystems nach Fig. 3, ebenfalls in perspektivischer Darstellung.

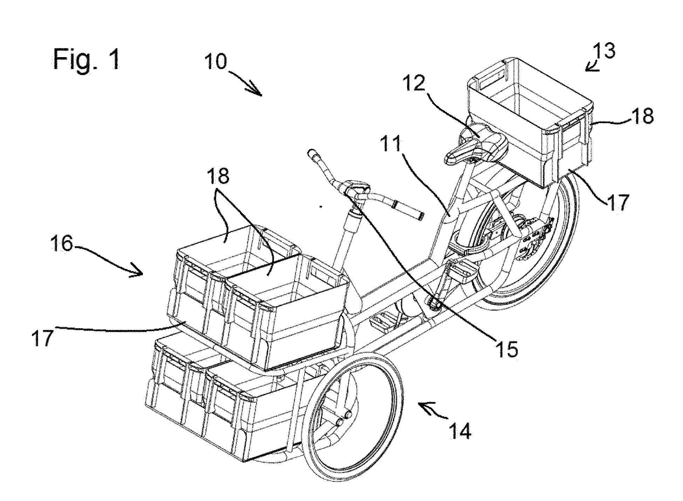

Fig. 1 zeigt ein in seiner Gesamtheit mit 10 bezeichnetes, dreijähriges Lastenfahrrad, dass an seinem Rahmengestell 11 hinter dem Sattel 12 mit einem ersten Lastträgersystem 13 und an seinem vorderen Lenkschemel 14 wurde vor dem Fahrzeuglenker 15 mit einem zweiten Lastträgersystem 16 nach der Erfindung versehen ist.

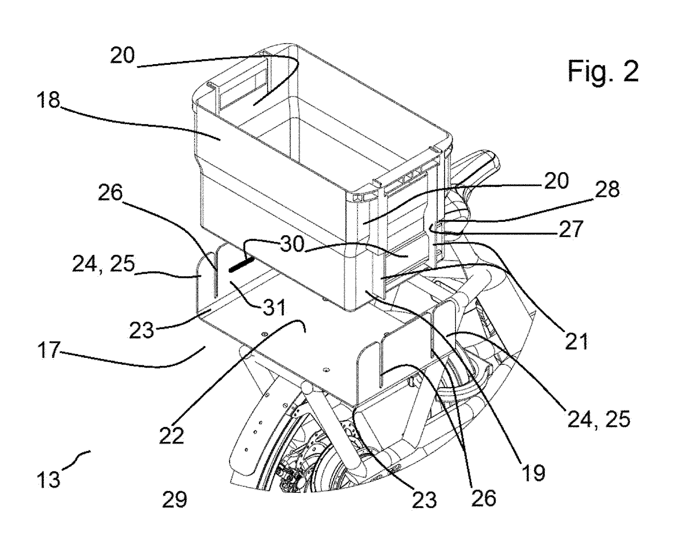

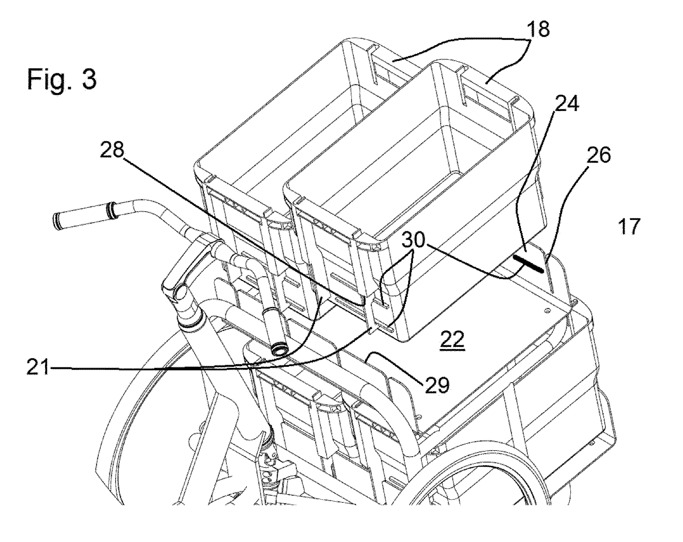

Die beiden Lastträger Systeme und 13,16 sind in den Figuren 2 und 3 mehr im Detail dargestellt. Sie weisen jeweils einen unteren Lastträger 17 und eine bzw. zwei darauf angeordnete oder anordbare Aufnahmekiste(n) 18 auf, in denen Briefe, Werbesendungen oder andere zu transportierenden Gegenstände aufgenommen sein können.

Zur Montage der Aufnahmekisten 18 auf den Lastträgern 17 der beiden Lastträgersysteme 13,16 sind die Aufnahmekisten 18 an den Außenseiten 19 ihrer einander gegenüberliegenden schmalen Kistenseitenwänden 20 mit je 2 vertikalen, nach außen vorspringenden Riegelstegen 21 versehen. Die Lastträger 17 haben jeweils einen unteren Tragboden 22 und zwei von diesem an dessen Bodenrändern 23 aufragende Begrenzungswände 24, die aufragende Halteelemente 25 bilden, deren Abstand voneinander an die Länge der Kisten, also den Abstand von deren schmalen Kistenseitenwänden 20 angepasst ist. In den Begrenzungswänden 24 sind für jede Aufnahmekiste 18 zwei vertikale Aufnahmeschlitze 26 vorgesehen, in die die Riegelstege 21 im am Lastträger 17 montierten Zustand der Aufnahmekisten 18 von oben formschlüssig einfassen.

In den Fig. 2 und 3 kann man erkennen, dass die Riegelstege 21 an ihren oberen Enden 27 von Anschlagflächen 28 begrenzt sind, die sich im montierten Zustand der Kiste 18 auf dem oberen Rand 29 der Begrenzungswände 24 auflegen. Wie Fig. 1 zeigt, ragen die Riegelstege 21 im montierten Zustand der Kisten 18 außen aus den Aufnahmeschlitzen 26 ein Stück weit heraus.

Die Aufnahmekisten 18 sind an einer oder beiden ihrer Außenseiten 19 an den schmalen Kistenseitenwänden 20 mit streifenförmigen, gummielastischen Pufferelementen 30 versehen. Alternativ oder ergänzend hierzu können auch an den Innenseiten 31 der Begrenzungswände 24 derartige Pufferelemente 30 angebracht sein, wie dies in Fig. 3 dargestellt ist. Die Pufferelemente 30 sorgen dafür, dass die Aufnahmekisten 18 zwischen den an gegenüberliegenden Seiten des Lastträgers ausgebildeten Halteelementen 25 fest und ohne Spiel einfassen können und somit beim Fahren mit dem Fahrzeug keine Klappergeräusche verursachen. Es ist auch möglich, entsprechende Puffer- oder Dämpfungselemente, beispielsweise in Form einer Neoprenmatte, an der Unterseite der Kisten 18 bzw. auf der Oberseite des Tragbodens 22 anzubringen, um Geräusche infolge einer Auf- und Abbewegung der Kisten während der Fahrt zu verhindern.

Die Aufnahmeschlitze 26 sind entlang ihrer vertikal verlaufenden Seitenkanten mit (nur in Fig.3 gezeigten) Gleitführungen aus einem elastischen Material, beispielsweise aus Gummi oder Polyurethan, versehen, die für eine spielfreie, gedämpfte Aufnahme der Riegelstege in den Aufnahmeschlitzen sorgt.

Das dargestellte und beschriebene Lastträgersystem ermöglicht eine bestechend einfache Montage der Aufnahmekisten am Lastträger, indem die Kisten nämlich einfach von oben so auf dem Lastträger angeordnet werden, dass die an den Schmalseiten der Kisten angeordneten Riegelstege formschlüssig in die Aufnahmeschlitze in den Begrenzungswänden einfassen. Wenn dabei wie in dem gezeigten Ausführungsbeispiel der Abstand der Riegelstege voneinander an der einen Schmalseite kleiner ist als an der anderen Schmalseite und die Aufnahmeschlitze entsprechend hieran angepasst sind, ist eine Montage der Kisten jeweils nur in genau einer Ausrichtung relativ zum Lastträger möglich. Auch ohne zusätzliche Sicherungsmittel wie z.B. Spanngurte, Klemmbügel oder Gummigurte halten die Kisten auch bei zügiger Fahrt über unebene Fahrbahnen sicher auf ihrem Lastträger, denn die dabei auftretenden Kräfte, die in Vertikalrichtung auf die Kisten nach oben wirken, werden regelmäßig von Kräften quer zur Vertikalrichtung überlagert, mit der Folge, dass sich die Riegelstege 21 in den Aufnahmeschlitzen 26 verklemmen und ein unbeabsichtigtes Herausheben der Kisten durch die infolge der Kippbewegung der Kiste auftretende Selbsthemmung unterbunden wird. Der freie Zugang zu den in den Kisten befindlichen Transportgütern, beispielsweise Briefe, Päckchen o.dgl. ist allzeit gewährleistet.

## Patentansprüche

1. Lastträgersystem für ein Lastentransportfahrzeug, besondere ein Lastenrad, mit einem am Fahrzeug fest angeordneten oder anordbaren Lastträger und mindestens einer am Lastträger abnehmbar montierbaren Aufnahmekiste, **dadurch gekennzeichnet, dass** die Aufnahmekiste (18) an den Außenseiten (19) von zwei einander gegenüberliegenden Kistenseitenwänden (20) mit je mindestens zwei im wesentlichen vertikalen Riegelstegen (21) versehen ist und dass der Lastträger (17) mindestens zwei in ihrem Abstand an den Abstand der Kistenseitenwände (20) angepasste, aufragende Halteelemente (25) aufweist, die mit im wesentlichen vertikalen Aufnahmeschlitzen (26) versehen sind, in die die Riegelstege (21) im am Lastträger (17) montierten Zustand der Aufnahmekiste (18) formschlüssig einfassen.

2. Lastträger System nach Anspruch 1, **dadurch gekennzeichnet, dass** die Halteelemente (25) in Form von sich vorzugsweise zumindest an einem Teilbereich der Außenseiten (19) der Kistenseitenwände (20) anlegenden Begrenzungswänden (24) ausgebildet sind, in denen je mindestens zwei Aufnahmeschlitze (26) im Abstand der Riegelstege (21) ausgebildet sind.

3. Lastträgersystem nach Anspruch 1 oder 2, dass die Riegelstege (21) an ihren oberen Enden (27) von Anschlagflächen (28) begrenzt sind.

4. Lastträgersystem nach einem der Ansprüche 1 bis 3, **dadurch gekennzeichnet, dass** die Riegelstege (21) im montierten Zustand außen aus den Aufnahmeschlitzen (26) ein Stück weit herausragen.

5. Lastträgersystem nach einem der Ansprüche 2 bis 4, **dadurch gekennzeichnet, dass** die Begrenzungswände (24) an einem unteren Tragboden (22) des Lastträgers (17) an zwei von dessen Bodenrändern (23) aufragend angeordnet sind.

6. Lastträgersystem nach einem der Ansprüche 1 bis 5, **dadurch gekennzeichnet, dass** die Außenseiten (19) der Kistenseitenwände (20) und/oder die der Aufnahmekiste (18) zugewandten Innenseiten (31) der Halteelemente (25) mit gummielastischen Pufferelementen (30) versehen sind.

7. Lastträgersystem nach einem der Ansprüche 1 bis 6, **dadurch gekennzeichnet, dass** die Riegelstege (21) oder die diese aufnehmenden Aufnahmeschlitze (26) mit vorzugsweise elastischen Gleitführungen (32) versehen sind.

8. Lastträgersystem nach einem der Ansprüche 1 bis 7, **dadurch gekennzeichnet, dass** der Lastträger (17) zur Aufnahme mehrerer nebeneinander angeordneter Aufnahmekisten (18) ausgebildet ist.
